# EUROPEAN PATENT SPECIFICATION

(11) **EP 2 723 028 B1**
(45) Date of publication and mention of the grant of the patent: **01.05.2019**
(21) Application number: 11867829.1
(22) Date of filing: 19.08.2011
(51) Int. Cl.: H04L 5/14, H04L 25/03

(54) **TIME-DIVISION DUPLEX FILTERING METHOD AND DEVICE**
VERFAHREN UND VORRICHTUNG ZUR FILTERUNG VON ZEITDUPLEX-SIGNALEN
PROCÉDÉ ET DISPOSITIF DE FILTRAGE DE SIGNAUX DE TYPE TDD

(30) Priority: 14.06.2011 CN 201110159319
(43) Date of publication of application: 23.04.2014
(73) Proprietor: ZTE Corporation, Shenzhen, Guangdong 518057 (CN)
(72) Inventor: CHEN, Wei, Shenzhen Guangdong 518057 (CN); CAO, Zhen, Shenzhen Guangdong 518057 (CN); QIU, Hao, Shenzhen Guangdong 518057 (CN)
(74) Representative: Lavoix
(86) International application number: PCT/CN2011/078625
(87) International publication number: WO 2012/171268

(56) References cited:
- WO-A1-2010/037405
- CN-A- 1 588 936
- CN-A- 1 929 466
- CATT ET AL: "Design of special timeslots and pilot channel for EUTRA TDD", 3GPP DRAFT; R1-051401, vol. RAN WG1, no. Seoul, 7 November 2005 (2005-11-07), XP050100993, Korea [retrieved on 2005-11-01]
- CATT ET AL: "Frame structure design and analyze of OFDM TDD for LTE", 3GPP DRAFT; R1-051178, vol. RAN WG1, no. San Diego, 3 October 2005 (2005-10-03), XP050100784, USA [retrieved on 2005-10-03]

## Description

### TECHNICAL FIELD

The disclosure relates to the field of filtering technology for a wireless communication system, and in particular to a time-division duplex multiplexing filtering method and a time-division duplex multiplexing filtering device.

### BACKGROUND

In a Time-Division Duplex Long Term Evolution (TDD-LTE) system, in order to suppress sidelobes to reduce interference of an adjacent channel, shaping filtering needs to be performed on In-phase Quadrature (IQ) signals to be transmitted and received. In order to ensure system performance, a high-order shaping filtering device needs to be used respectively at a transmitting side and a receiving side.

However, along with increase of an order of a shaping filtering device, a large number of calculation units and storage units will be consumed. Furthermore, since a set of shaping filtering device needs to be used respectively at a transmitting side and a receiving side in a whole system, the calculation units and storage units will be consumed two times. Reduction of a cost of communication devices is a current development trend, and how to reduce resource consumption of shaping filters at a transmitting side and a receiving side in a TDD-LTE system becomes a problem to be solved in industry.

The related art for reducing the resource consumption of the shaping filters at the transmitting side and the receiving side in the TDD-LTE system includes that: calculation amount of the shaping filter are reduced to decrease the number of calculation units and storage units in the shaping filter, but the method cannot reduce resource consumption under the premise of ensuring system performance due to reduction of calculation amount; and a working clock frequency of the shaping filter is improved to perform multi-carrier multiplexing at a transmitting side and a receiving side respectively, thus achieving the purpose of saving calculation units and storage units, but the method cannot further save resources after the clock frequency is improved to reach saturation.

CATT ET AL: "Design of special timeslots and pilot channel for EUTRA TDD", 3GPP DRAFT; RI-051401, vol. RAN WG1, no. Seoul, 7 November 2005, Korea, aims at the EUTRA TDD frame structure and proposes the design method of UL and DL special synchronization access timeslot apply for this frame structure.

Therefore, the method in the related art cannot effectively reduce the resource consumption of the shaping filters at the transmitting side and the receiving side in the TDD-LTE system.

### SUMMARY

Aspects of the present invention are provided in the independent claims. Preferred embodiments are provided in the dependent claims.

In more detail, the present disclosure is to provide a time-division duplex multiplexing filtering method and a time-division duplex multiplexing filtering device, so as to solve the problem of high resource consumption of shaping filters at a transmitting side and a receiving side in a TDD-LTE system.

A time-division duplex multiplexing filtering method provided by the disclosure includes:
generating time slot coordinates used for data transmission and reception according to a chip rate of baseband data of a Time-Division Duplex Long Term Evolution (TDD-LTE) system and a frame structure of the TDD-LTE system;
receiving data of a transmitting side and a receiving side at corresponding time slices according to the generated time slot coordinates;
incorporating the received data into a single-channel continuous data and then performing shaping filtering on the incorporated data; and
parsing the data on which the shaping filtering is performed and transmitting the parsed data at corresponding time slices according to the generated time slot coordinates.

In the aforementioned solution, the generating time slot coordinates used for data transmission and reception may include:
generating the time slot coordinates used for data transmission and reception by taking each N chip rates of the baseband data of the TDD-LTE system as a clock rate according to the frame structure of the TDD-LTE system and the chip rate of the baseband data of the TDD-LTE system, wherein N is an integer which is no less than 1, and the time slot coordinates may include frame indication information, subframe indication information, time slot indication information and chip indication information.

In the aforementioned solution, the data of the transmitting side and the receiving side may include: data processed by a receiving-side preceding-stage module and data processed by a transmitting-side preceding-stage module.

In the aforementioned solution, the incorporating the received data into a single-channel continuous data and then performing shaping filtering on the incorporated data may include:
incorporating data processed by a receiving-side preceding-stage, which are received at time slices, with baseband data of the transmitting side, which are received at the time slices into the single-channel continuous data, according to the generated time slot coordinates and current time slot configuration information of a system, and inputting the incorporated data into a shaping filter at N chip rates of the baseband data of the TDD-LTE system.

In the aforementioned solution, the parsing the data on which the shaping filtering is performed and transmitting the parsed data at corresponding time slices according to the generated time slot coordinates may include:
acquiring data processed by a receiving-side preceding-stage and baseband data of the transmitting side at time slices, which are incorporated and filtered, according to the generated time slot coordinates and current time slot configuration information of a system; and
parsing the data processed by the receiving-side preceding-stage and the baseband data of the transmitting side which are incorporated and filtered, acquiring the filtered data processed by the receiving-side preceding-stage and the filtered baseband data of the transmitting side, and transmitting the filtered data processed by the receiving-side preceding-stage and the filtered baseband data of the transmitting side at corresponding time slices.

A time-division duplex multiplexing filtering device provided by the disclosure includes:
a time slot coordinate calculation module, configured to generate time slot coordinates used for data transmission and reception according to a chip rate of baseband data of a TDD-LTE system and a frame structure of the TDD-LTE system, and transmit the generated time slot coordinates to a framing input control module and a de-framing output control module;
the framing input control module, configured to receive data of a transmitting side and a receiving side at corresponding time slices according to the time slot coordinates generated by the time slot coordinate calculation module;
a shaping filtering module, configured to incorporate the data received by the framing input control module into a single-channel continuous data and then perform shaping filtering on the incorporated data; and
the de-framing output control module, configured to parse the data on which the shaping filtering is performed by the shaping filtering module and transmit the parsed data at corresponding time slices according to the time slot coordinates generated by the time slot coordinate calculation module.

In the aforementioned solution, the time slot coordinate calculation module may be configured to generate the time slot coordinates used for data transmission and reception by taking each N chip rates of the baseband data of the TDD-LTE system as a clock rate according to the frame structure of the TDD-LTE system and the chip rate of the baseband data of the TDD-LTE system, wherein N is an integer which is no less than 1, and the time slot coordinates may include frame indication information, subframe indication information, time slot indication information and chip indication information.

In the aforementioned solution, the framing input control module may be configured to receive data processed by a receiving-side preceding-stage module and data processed by a transmitting-side preceding-stage module.

In the aforementioned solution, the framing input control module may be configured to incorporate data processed by a receiving-side preceding-stage ,which are received at time slices by the framing input control module, with baseband data of the transmitting side, which are received at the time slices by the framing input control module, into the single-channel continuous data, according to the time slot coordinates generated by the time slot coordinate calculation module and current time slot configuration information of a system, and input the incorporated data to the shaping filtering module at N chip rates of the baseband data of the TDD-LTE system.

In the aforementioned solution, the de-framing output control module may be configured to: acquire data processed by a receiving-side preceding-stage and baseband data of the transmitting side at time slices, which are incorporated into the single-channel continuous data and then filtered by the shaping filtering module, according to the time slot coordinates generated by the time slot coordinate calculation module and current time slot configuration information of a system; and parse the data processed by the receiving-side preceding-stage and the baseband data of the transmitting side which are incorporated into the single-channel continuous data and then filtered, acquire the filtered data processed by the receiving-side preceding-stage and the filtered baseband data of the transmitting side, and transmit the filtered data processed by the receiving-side preceding-stage and the filtered baseband data of the transmitting side at corresponding time slices.

The disclosure provides a time-division duplex multiplexing filtering method and a time-division duplex multiplexing filtering device. The method includes that: time slot coordinates used for data transmission and reception are generated according to a chip rate of baseband data of a TDD-LTE system; data of a transmitting side and a receiving side are received at corresponding time slices according to the time slot coordinates; shaping filtering is performed on the received data; and the filtered data are parsed and the parsed data are transmitted at corresponding time slices. Since the time slot coordinates are generated and time-division duplex multiplexing shaping filtering is performed on the data of the transmitting side and the receiving side at different time slices in the disclosure, a shaping filter does not need to be set separately at the transmitting side and the receiving side, so as to reduce the number of calculation units and storage units and thus effectively reducing the cost of the shaping filter. Therefore, the problem of high resource consumption of shaping filters at a transmitting side and a receiving side in a TDD-LTE system is solved.

### BRIEF DESCRIPTION OF THE DRAWINGS

The drawings illustrated here are intended to provide further understanding to the disclosure, and constitute a portion of the disclosure. Illustrative embodiments of the disclosure and description thereof are used to explain the disclosure instead of constituting improper restriction to the disclosure.

The present invention is defined by the appended claims and limited only by their scope. Any embodiment (of the invention) referred to in this description and not fully falling within the scope of said appended claims is to be interpreted as an example useful for understanding the present invention. In the drawings:
Fig. 1 is a time-division duplex multiplexing filtering process provided by the disclosure;
Fig. 2A is a schematic diagram of a protocol frame format in a TDD-LTE system;
Fig. 2B is a schematic diagram of another protocol frame format in the TDD-LTE system;
Fig. 3 is a schematic diagram of time slot configuration information of a TDD-LTE system protocol adopted by the disclosure; and
Fig. 4 is a structural diagram of a time-division duplex multiplexing filtering device provided by the disclosure.

### DETAILED DESCRIPTION

In order to make the technical problem to be solved, the technical solution and beneficial effects of the disclosure clearer and easier to understood, the disclosure is further elaborated below with reference to the drawings and embodiments. It should be understood that specific embodiments described here are merely intended to interpret the disclosure instead of limiting the disclosure.

In order to save the number of calculation units and storage units of a shaping filter effectively, the disclosure provides a time-division duplex multiplexing filtering method and a time-division duplex multiplexing filtering device.

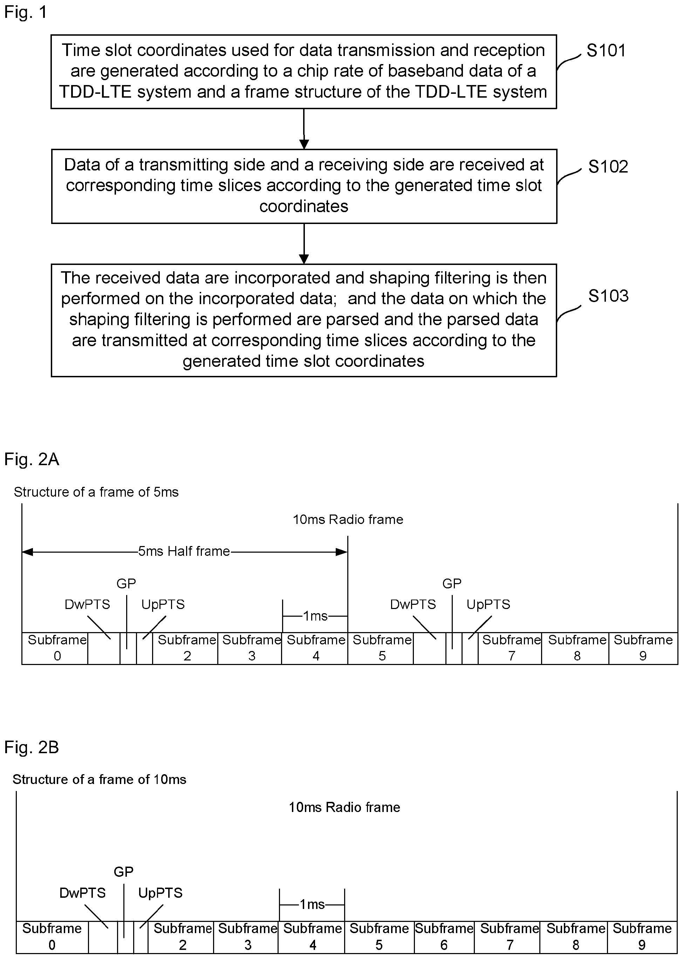

A time-division duplex multiplexing filtering process provided by the disclosure, shown in Fig. 1, includes the following steps:
S101: Time slot coordinates used for data transmission and reception are generated according to a chip rate of baseband data of a TDD-LTE system and a frame structure of the TDD-LTE system.

Here, the generating time slot coordinates used for data transmission and reception includes that: the time slot coordinates used for data transmission and reception are generated by taking each N chip rates of the baseband data of the TDD-LTE system as a clock rate according to the frame structure of the TDD-LTE system and the chip rate of the baseband data of the TDD-LTE system, wherein N is an integer which is no less than 1, and the time slot coordinates include frame indication information, subframe indication information, time slot indication information and chip indication information. Wherein the frame indication information is used for indicating related information of a frame, such as a period and a position of the frame; the subframe indication information is used for indicating related information of a subframe, such as a position and a period of the subframe; the time slot indication information is used for indicating related information of a time slot, such as a period of the time slot; and the chip indication information is used for indicating related information of a chip, such as a period of the chip.

S102: Data of a transmitting side and a receiving side are received at corresponding time slices according to the generated time slot coordinates.

Wherein the receiving the data of the transmitting side and the receiving side include that: data processed by a receiving-side preceding-stage module and data processed by a transmitting-side preceding-stage module are received.

S103: The received data are incorporated and shaping filtering is then performed on the incorporated data; and the data on which the shaping filtering is performed are parsed and the parsed data are transmitted at corresponding time slices according to the generated time slot coordinates.

Specifically, the performing shaping filtering on the incorporated data includes that: data processed by a receiving-side preceding-stage and baseband data of the transmitting side, which are received at time slices, are incorporated according to the generated time slot coordinates and current time slot configuration information of a system, and the incorporated data are input into a shaping filter to be filtered at N chip rates of the baseband data of the TDD-LTE system. Here, the data processed by the receiving-side preceding-stage module include the data processed by the receiving-side preceding-stage, and the data processed by the transmitting-side preceding-stage module include the baseband data of the transmitting side.

In a filtering method based on time-division duplex multiplexing of the disclosure, the data processed by the receiving-side preceding-stage module and the data processed by the transmitting-side preceding-stage module are received, shaping filtering is performed on the received data, and the filtered data are transmitted to a receiving-side post-stage module and a transmitting-side post-stage module to perform subsequent processing. Wherein, the receiving-side preceding-stage module includes a receiving-side preceding-stage processing module, the transmitting-side preceding-stage module includes a transmitting-side baseband processing module, the receiving-side post-stage module includes a receiving-side baseband processing module, and the transmitting-side post-stage module includes a transmitting-side post-stage processing module.

The parsing the data on which the shaping filtering is performed and transmitting the parsed data at corresponding time slices according to the generated time slot coordinates includes that: data processed by a receiving-side preceding-stage and baseband data of the transmitting side at time slices, which are incorporated and filtered are acquired, according to the generated time slot coordinates and current time slot configuration information of a system; and the data processed by the receiving-side preceding-stage and the baseband data of the transmitting side which are incorporated and filtered are parsed, the filtered data processed by the receiving-side preceding-stage and the filtered baseband data of the transmitting side are acquired, and the filtered data processed by the receiving-side preceding-stage and the filtered baseband data of the transmitting side are transmitted at corresponding time slices.

Since the time slot coordinates are generated and time-division duplex multiplexing shaping filtering is performed on the data of the transmitting side and the receiving side at different time slices in the disclosure, a shaping filter does not need to be set separately at the transmitting side and the receiving side, so as to reduce the number of calculation units and storage units and thus reducing the cost of the shaping filter.

Specifically, time slot coordinates are determined in the disclosure according to the characteristics of a frame structure in a time-division duplex wireless communication system. Fig. 2A is a schematic diagram of a protocol frame format in a TDD-LTE system provided by the disclosure. It can be seen from Fig. 2A that one radio frame includes two half frames of 5ms, each of which includes five subframes of 1ms and which are subframes 0∼4 and subframes 5∼9 respectively. Furthermore, each half frame contains specific time slots which include a Downlink Pilot Time Slot (DwPTS), a Guard Period (GP) and an Uplink Pilot Time Slot (UpPTS). The specific time slots are located in subframe 1 of the first half frame of 5ms and subframe 6 of the second half frame of 5ms respectively. Fig. 2B is a schematic diagram of another protocol frame format in the TDD-LTE system. It can be seen from Fig. 2B that the radio frame of 10ms includes ten subframes, i.e., subframes 0∼9 respectively, each of which is 1ms, and the subframe 1 contains specific time slots which include a DwPTS, a GP and an UpPTS.

A work clock during a filtering process is determined according to a chip rate VTDD-LTE of baseband data of a TDD-LTE system, wherein a rate VCLK of the work clock meets VCLK=N-VTDD-LTE and N is an integer which is no less than 1. Time slot coordinates used for data transmission and reception are generated according to the determined rate of the work clock and a frame structure of the TDD-LTE system. The generated time slot coordinates are the same as the frame formats of the TDD-LTE system in Figs. 2A and 2B, and each chip of baseband data of the TDD-LTE system lasts N times of the rate VCLK.

Time slot coordinates generated according to a protocol frame format of a TDD-LTE system include frame indication information, subframe indication information, time slot indication information, chip indication information and the like. Data of a transmitting-side preceding-stage module and data of a receiving-side preceding-stage module are selected at different time slices according to the generated time slot coordinates.

Specifically, data CHT transmitted by the transmitting-side preceding-stage module and data CHR received by the receiving-side preceding-stage module are converted into data CHT-CLK to be transmitted and data CHR-CLK to be received, rates of which are the rate VCLK of the work clock. The data CHT-CLK transmitted by the transmitting-side preceding-stage module and the data CHR-CLK received by the receiving-side preceding-stage module, which are discrete at time slices and rates of which are converted into the rate VCLK of the work clock, i.e., two-channel data, constitute single-channel data CHTR-CLK at time slices according to the frame indication information, the subframe indication information, the time slot indication information and the chip indication information included in the generated time slot coordinates and a current time slot configuration condition of a system. Since the rates of the CHT-CLK and the CHR-CLK are determined according to the rate VCLK of the work clock and the rate VCLK of the work clock is N times of the VTDD-LTE, the two-channel discrete data CHT-CLK to be transmitted and the data CHR-CLK to be received do not conflict at the same time slice when being framed.

At each time slice, single-channel data CHTR-CLK including the data CHT-CLK to be transmitted and the data CHR-CLK to be received are transmitted to a shaping filter to obtain filtered data CHTR-CLK-SF. Since rates of data before and after shaping filtering are invariant in the TDD-LTE system, the shaping filter transmits the filtered data CHTR-CLK-SF at the rate VCLK of the work clock.

Single-channel filtered data CHTR-CLK-SF which are continuous at each time slice are parsed to filtered data CHT-CLK-SF to be transmitted and filtered data CHR-CLK-SF to be received which are discrete at time slices according to the generated time slot coordinates and current time slot configuration information of a system.

The obtained filtered data CHT-CLK-SF to be transmitted and the obtained filtered data CHR-CLK-SF to be received are converted into data CHT-SF to be transmitted and data CHR-SF to be received from the rate VCLK of the work clock to data rates of a transmitting-side post-stage module and a receiving-side post-stage module. The obtained data CHT-SF to be and the obtained data CHR-SF are transmitted to the transmitting-side post-stage module and the receiving-side post-stage module.

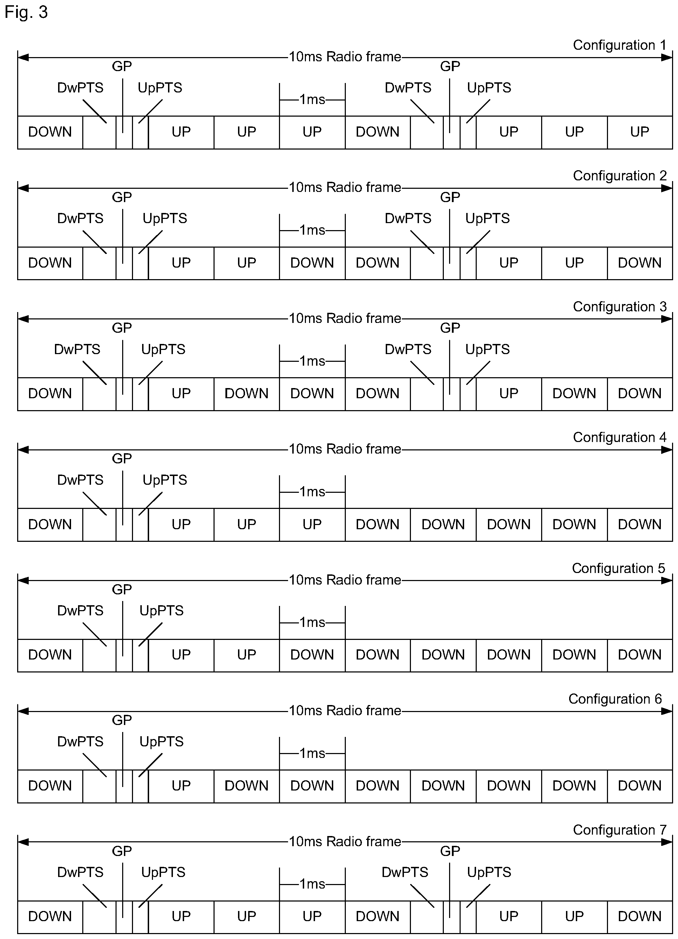

Fig. 3 is a schematic diagram of time slot configuration information of a TDD-LTE system protocol adopted by the disclosure. Seven kinds of time slot configuration information are included in the TDD-LTE system. Specifically as shown in Fig. 3, each radio frame is 10ms, and each subframe is 1ms, wherein the second subframe contains specific time slots, and in each kind of time slot configuration information, "DOWN" represents a downlink time slot, "UP" represents an uplink time slot. Data to be transmitted are placed in a downlink time slot, and data to be received are placed in an uplink time slot. The specific time slots include a DwPTS, a GP and an UpPTS.

The disclosure is elaborated below with reference to a specific embodiment.

Chip rates VTDD-LTE of baseband data of the TDD-LTE system are 7.68M, 15.36M and 30.72M under different bandwidths respectively. It is illustrated by taking the chip rate VTDD-LTE of 30.72M of baseband data of the TDD-LTE system as an example. Here, N is 2, and a work clock VCLK during a filtering process can be obtained to be 61.44M according to VCLK=N·VTDD-LTE.

Time slot coordinates are generated according to the determined work clock and the protocol frame formats of the TDD-LTE system shown in Figs. 2A and 2B. A protocol frame indicator of the TDD-LTE system takes 10ms as one cycle. A subframe indicator takes 1ms as one cycle, in which includes specific time slots including a DwPTS, a GP and an UpPTS. A time slot indicator takes 0.5ms as one cycle. A chip indicator takes two clocks of 61.44M as one cycle.

Rates of received data of a transmitting-side preceding-stage module and received data of a receiving-side preceding-stage module are converted into a rate of 61.44M. During a process of rate conversion, proper change can be performed according to a clock rate and requirement of system shaping filtering, for example, IQ parallel 32bit is converted into IQ serial 16bit.

Data to be transmitted and data to be received in the obtained data of a rate of 61.44M are placed in downlink time slots and uplink time slots respectively according to the generated time slot coordinates and current time slot configuration information of a system, such as configuration 1 in Fig. 3, that is, two-channel discrete data are incorporated into single-channel continuous data. The single-channel data incorporated are filtered at a clock rate of 61.44M.

Then, the single-channel data filtered are transmitted at the clock rate of 61.44M, wherein the format of the filtered data is the same as that of data before filtering. When the single-channel data filtered are acquired, the received data are parsed to obtain two-channel discrete data filtered according to the generated time slot coordinates and the current time slot configuration information of the system, wherein the process is an inverse process of incorporating two-channel discrete data into single-channel continuous data.

After the two-channel discrete data filtered are acquired, the two-channel discrete data are converted into data of a corresponding rate according to rate requirements of a transmitting-side post-stage module and a receiving-side post-stage module, wherein the format of each-channel data is adapted to that of a corresponding post-stage module. Two-channel adapted data are transmitted to the transmitting-side post-stage module or the receiving-side post-stage module respectively.

Since the time slot coordinates are generated and time-division duplex multiplexing shaping filtering is performed on the data of the transmitting side and the receiving side at different time slices in the disclosure, a shaping filter does not need to be set separately at the transmitting side and the receiving side, so as to reduce the number of calculation units and storage units and thus reducing the cost of the shaping filter.

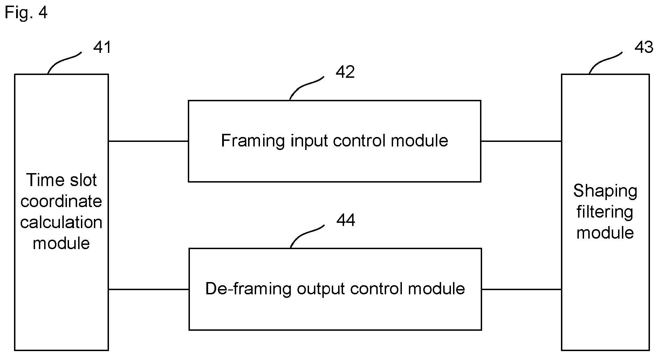

The time-division duplex multiplexing filtering method is implemented based on a time-division duplex multiplexing filtering device. Fig. 4 is a structural diagram of a time-division duplex multiplexing filtering device provided by the disclosure, which includes:
a time slot coordinate calculation module 41, configured to generate time slot coordinates used for data transmission and reception according to a chip rate of baseband data of a TDD-LTE system and a frame structure of the TDD-LTE system, and transmit the generated time slot coordinates to a framing input control module 42 and a de-framing output control module 44;
the framing input control module 42, configured to receive data of a transmitting side and a receiving side at corresponding time slices according to the time slot coordinates generated by the time slot coordinate calculation module 41;
a shaping filtering module 43, configured to incorporate data received by the framing input control module 42 and then perform shaping filtering on the incorporated data; and
the de-framing output control module 44, configured to parse the data on which the shaping filtering is performed by the shaping filtering module 43 and transmit the parsed data at corresponding time slices according to the time slot coordinates generated by the time slot coordinate calculation module 41.

The time slot coordinate calculation module 41 is configured to generate the time slot coordinates used for data transmission and reception by taking each N chip rates of the baseband data of the TDD-LTE system as a clock rate according to the frame structure of the TDD-LTE system and the chip rate of the baseband data of the TDD-LTE system, wherein N is an integer which is no less than 1, and the time slot coordinates include frame indication information, subframe indication information, time slot indication information and chip indication information.

The framing input control module 42 is configured to receive data processed by a receiving-side preceding-stage module and data processed by a transmitting-side preceding-stage module.

The framing input control module 42 is configured to incorporate data processed by a receiving-side preceding-stage ,which are received at time slices by the framing input control module 42, with baseband data of the transmitting side, which are received at the time slices by the framing input control module 42, according to the time slot coordinates generated by the time slot coordinate calculation module 41 and current time slot configuration information of a system, and input the incorporated data to the shaping filtering module 43 at N chip rates of the baseband data of the TDD-LTE system.

The de-framing output control module 44 is configured to: acquire data processed by a receiving-side preceding-stage and baseband data of the transmitting side at time slices, which are incorporated and filtered by the shaping filtering module 43, according to the time slot coordinates generated by the time slot coordinate calculation module 41 and current time slot configuration information of a system; and parse the data processed by the receiving-side preceding-stage and the baseband data of the transmitting side which are incorporated and filtered, acquire the filtered data processed by the receiving-side preceding-stage and the filtered baseband data of the transmitting side, and transmit the filtered data processed by the receiving-side preceding-stage and the filtered baseband data of the transmitting side at corresponding time slices.

The disclosure provides a time-division duplex multiplexing filtering method and a time-division duplex multiplexing filtering device. The method includes that: time slot coordinates used for data transmission and reception are generated according to a chip rate of baseband data of a TDD-LTE system; data of a transmitting side and a receiving side are received at corresponding time slices according to the time slot coordinates; shaping filtering is performed on the received data; and the filtered data are parsed and the parsed data are transmitted at corresponding time slices. Since the time slot coordinates are generated and time-division duplex multiplexing shaping filtering is performed on the data of the transmitting side and the receiving side at different time slices in the disclosure, a shaping filter does not need to be set separately at the transmitting side and the receiving side, so as to reduce the number of calculation units and storage units and thus reducing the cost of the shaping filter.

The above description illustrates and describes a preferable embodiment of the disclosure. However, as previously mentioned, it should be understood that the disclosure is not restricted thereto. The scope of the present invention is determined only by the scope of the appended claims.

### INDUSTRIAL APPLICABILITY

With a time-division duplex multiplexing filtering method and a time-division duplex multiplexing filtering device provided by the disclosure, time slot coordinates used for data transmission and reception are generated according to a chip rate of baseband data of a TDD-LTE system; data of a transmitting side and a receiving side are received at corresponding time slices according to the time slot coordinates; shaping filtering is performed on the received data; and the filtered data are parsed and the parsed data are transmitted at corresponding time slices. A shaping filter does not need to be set separately at the transmitting side and the receiving side, so as to reduce the number of calculation units and storage units and thus effectively reducing the cost of the shaping filter. Therefore, the problem of high resource consumption of shaping filters at a transmitting side and a receiving side in a TDD-LTE system is solved.

## Claims

1. A time-division duplex multiplexing filtering method comprising:
generating (S101) time slot coordinates used for data transmission and reception according to a chip rate of baseband data of a Time-Division Duplex Long Term Evolution, TDD-LTE, system and a frame structure of the TDD-LTE system;
receiving (S102) data of a transmitting side and a receiving side at corresponding time slices according to the generated time slot coordinates;
said method being **characterized by**:
incorporating (S103) the received data into a single-channel continuous data and then performing shaping filtering on the incorporated data; and
parsing (S103) the data on which the shaping filtering is performed and transmitting the parsed data at corresponding time slices according to the generated time slot coordinates.

2. The method according to claim 1, wherein the generating time slot coordinates used for data transmission and reception comprises:
generating the time slot coordinates used for data transmission and reception by taking each N chip rates of the baseband data of the TDD-LTE system as a clock rate according to the frame structure of the TDD-LTE system and the chip rate of the baseband data of the TDD-LTE system, wherein N is an integer which is no less than 1, and the time slot coordinates comprise frame indication information, subframe indication information, time slot indication information and chip indication information.

3. The method according to claim 2, wherein the data of the transmitting side and the receiving side comprise: data processed by a receiving-side preceding-stage module and data processed by a transmitting-side preceding-stage module.

4. The method according to claim 3, wherein the incorporating the received data into a single-channel continuous data and then performing shaping filtering on the incorporated data comprises:
incorporating data processed by a receiving-side preceding-stage, which are received at time slices, with baseband data of the transmitting side, which are received at the time slices into the single-channel continuous data, according to the generated time slot coordinates and current time slot configuration information of a system, and inputting the incorporated data to a shaping filter at N chip rates of the baseband data of the TDD-LTE system.

5. The method according to claim 3, wherein the parsing the data on which the shaping filtering is performed and transmitting the parsed data at corresponding time slices according to the generated time slot coordinates comprises:
acquiring data processed by a receiving-side preceding-stage and baseband data of the transmitting side at time slices, which are incorporated into the single-channel continuous data and then filtered, according to the generated time slot coordinates and current time slot configuration information of a system; and
parsing the data processed by the receiving-side preceding-stage and the baseband data of the transmitting side which are incorporated into the single-channel continuous data and then filtered, acquiring the filtered data processed by the receiving-side preceding-stage and the filtered baseband data of the transmitting side, and transmitting the filtered data processed by the receiving-side preceding-stage and the filtered baseband data of the transmitting side at corresponding time slices.

6. A time-division duplex multiplexing filtering device comprising:
a time slot coordinate calculation module (41), configured to generate time slot coordinates used for data transmission and reception according to a chip rate of baseband data of a Time-Division Duplex Long Term Evolution, TDD-LTE, system and a frame structure of the TDD-LTE system, and transmit the generated time slot coordinates to a framing input control module and a de-framing output control module (44);
the framing input control module (42), configured to receive data of a transmitting side and a receiving side at corresponding time slices according to the time slot coordinates generated by the time slot coordinate calculation said device being **characterized by** further comprising:
a shaping filtering module (43), configured to incorporate the data received by the framing input control module into a single-channel continuous data and then perform shaping filtering on the incorporated data; and
the de-framing output control module (44), configured to parse the data on which the shaping filtering is performed by the shaping filtering module and transmit the parsed data at corresponding time slices according to the time slot coordinates generated by the time slot coordinate calculation module.

7. The device according to claim 6, wherein
the time slot coordinate calculation module is configured to generate the time slot coordinates used for data transmission and reception by taking each N chip rates of the baseband data of the TDD-LTE system as a clock rate according to the frame structure of the TDD-LTE system and the chip rate of the baseband data of the TDD-LTE system, wherein N is an integer which is no less than 1, and the time slot coordinates comprise frame indication information, subframe indication information, time slot indication information and chip indication information.

8. The device according to claim 6, wherein
the framing input control module is configured to receive data processed by a receiving-side preceding-stage module and data processed by a transmitting-side preceding-stage module.

9. The device according to claim 8, wherein
the framing input control module is configured to incorporate data processed by a receiving-side preceding-stage, which are received at time slices by the framing input control module, with baseband data of the transmitting side, which are received at the time slices by the framing input control module, into the single-channel continuous data, according to the time slot coordinates generated by the time slot coordinate calculation module and current time slot configuration information of a system, and input the incorporated data to the shaping filtering module at N chip rates of the baseband data of the TDD-LTE system.

10. The device according to claim 8, wherein
the de-framing output control module is configured to: acquire data processed by a receiving-side preceding-stage and baseband data of the transmitting side at time slices, which are incorporated into the single-channel continuous data and then filtered by the shaping filtering module, according to the time slot coordinates generated by the time slot coordinate calculation module and current time slot configuration information of a system; and parse the data processed by the receiving-side preceding-stage and the baseband data of the transmitting side which are incorporated into the single-channel continuous data and then filtered, acquire the filtered data processed by the receiving-side preceding-stage and the filtered baseband data of the transmitting side, and transmit the filtered data processed by the receiving-side preceding-stage and the filtered baseband data of the transmitting side at corresponding time slices.

## Patentansprüche

1. Zeitduplex-Multiplexfilterverfahren, umfassend:
Erzeugen (S101) von Zeitschlitzkoordinaten, die zum Senden und Empfangen von Daten gemäß einer Chiprate von Basisbanddaten eines Zeitduplex-Long-Term-Evolution, TDD-LTE,-Systems und einer Rahmenstruktur des TDD-LTE-Systems verwendet werden;
Empfangen (S102) von Daten einer Sendeseite und einer Empfangsseite in entsprechenden Zeitscheiben gemäß den erzeugten Zeitschlitzkoordinaten;
wobei das Verfahren **gekennzeichnet ist durch**:
Einfügen (S103) der empfangenen Daten in kontinuierliche Einzelkanaldaten und anschließendes Durchführen von Formfilterung an den eingefügten Daten; und
Parsen (S103) der Daten, an welchen die Formfilterung durchgeführt wird, und Senden der geparsten Daten in entsprechenden Zeitscheiben gemäß den erzeugten Zeitschlitzkoordinaten.

2. Verfahren nach Anspruch 1, wobei das Erzeugen von Zeitschlitzkoordinaten, die zum Senden und Empfangen von Daten verwendet werden, umfasst:
Erzeugen der Zeitschlitzkoordinaten, die zum Senden und Empfangen von Daten verwendet werden, durch Nehmen aller N Chipraten der Basisbanddaten des TDD-LTE-Systems als eine Taktrate gemäß der Rahmenstruktur des TDD-LTE-Systems und der Chiprate der Basisbanddaten des TDD-LTE-Systems, wobei N eine ganze Zahl ist, die nicht kleiner als 1 ist, und die Zeitschlitzkoordinaten Rahmenangabeinformationen, Unterrahmenangabeinformationen, Zeitschlitzangabeinformationen und Chipangabeinformationen umfassen.

3. Verfahren nach Anspruch 2, wobei die Daten der Sendeseite und der Empfangsseite umfassen: Daten, die durch ein empfangsseitiges Vorstufenmodul verarbeitet werden, und Daten, die durch ein sendeseitiges Vorstufenmodul verarbeitet werden.

4. Verfahren nach Anspruch 3, wobei das Einfügen der empfangenen Daten in kontinuierliche Einzelkanaldaten und anschließende Durchführen von Formfilterung an den eingefügten Daten umfasst:
Einfügen von durch eine empfangsseitige Vorstufe verarbeitete Daten, die in Zeitscheiben empfangen werden, mit Basisbanddaten der Sendeseite, die in den Zeitscheiben empfangen werden, gemäß den erzeugten Zeitschlitzkoordinaten und aktuellen Zeitschlitzkonfigurationsinformationen eines Systems in die kontinuierlichen Einzelkanaldaten und Eingeben der eingefügten Daten bei N Chipraten der Basisbanddaten des TDD-LTE-Systems in ein Formfilter.

5. Verfahren nach Anspruch 3, wobei das Parsen der Daten, an welchen die Formfilterung durchgeführt wird, und Senden der geparsten Daten in entsprechenden Zeitscheiben gemäß den erzeugten Zeitschlitzkoordinaten umfasst:
Erfassen von Daten, die durch eine empfangsseitige Vorstufe verarbeitet werden, und Basisbanddaten der Sendeseite in Zeitscheiben, die gemäß den erzeugten Zeitschlitzkoordinaten und aktuellen Zeitschlitzkonfigurationsinformationen eines Systems in die kontinuierlichen Einzelkanaldaten eingefügt und anschließend gefiltert werden; und
Parsen der Daten, die durch die empfangsseitige Vorstufe verarbeitet werden, und der Basisbanddaten der Sendeseite, die in die kontinuierlichen Einzelkanaldaten eingefügt und anschließend gefiltert werden, Erfassen der gefilterten Daten, die durch die empfangsseitige Vorstufe verarbeitet werden, und der gefilterten Basisbanddaten der Sendeseite und Senden der gefilterten Daten, die durch die empfangsseitige Vorstufe verarbeitet werden, und der gefilterten Basisbanddaten der Sendeseite in entsprechenden Zeitscheiben.

6. Zeitduplex-Multiplexfiltervorrichtung, umfassend:
ein Zeitschlitzkoordinatenberechnungsmodul (41), das so konfiguriert ist, dass es Zeitschlitzkoordinaten erzeugt, die zum Senden und Empfangen von Daten gemäß einer Chiprate von Basisbanddaten eines Zeitduplex-Long-Term-Evolution, TDD-LTE,-Systems und einer Rahmenstruktur des TDD-LTE-Systems verwendet werden, und die erzeugten Zeitschlitzkoordinaten an ein Einrahmungseingabesteuermodul und eine Ausrahmungsausgabesteuermodul (44) sendet;
das Einrahmungseingabesteuermodul (42), das so konfiguriert ist, dass es Daten einer Sendeseite und einer Empfangsseite in Zeitscheiben empfängt, die den Zeitschlitzkoordinaten entsprechen, die durch die Zeitschlitzkoordinatenberechnung erzeugt werden, wobei die Vorrichtung **dadurch gekennzeichnet ist, dass** sie ferner umfasst:
ein Formfiltermodul (43), das so konfiguriert ist, dass es die durch das Einrahmungseingabesteuermodul empfangenen Daten in kontinuierliche Einzelkanaldaten einfügt und anschließend Formfilterung an den eingefügten Daten durchführt; und
das Ausrahmungsausgabesteuermodul (44), das so konfiguriert ist, dass es die Daten parst, an welchen die Formfilterung durch das Formfiltermodul durchgeführt wird, und die geparsten Daten in entsprechenden Zeitscheiben gemäß den Zeitschlitzkoordinaten sendet, die durch das Zeitschlitzkoordinatenberechnungsmodul erzeugt werden.

7. Vorrichtung nach Anspruch 6, wobei
das Zeitschlitzkoordinatenberechnungsmodul so konfiguriert ist, dass es die Zeitschlitzkoordinaten, die zum Senden und Empfangen von Daten verwendet werden, durch Nehmen aller N Chipraten der Basisbanddaten des TDD-LTE-Systems als eine Taktrate gemäß der Rahmenstruktur des TDD-LTE-Systems und der Chiprate der Basisbanddaten des TDD-LTE-Systems erzeugt, wobei N eine ganze Zahl ist, die nicht kleiner als 1 ist, und die Zeitschlitzkoordinaten Rahmenangabeinformationen, Unterrahmenangabeinformationen, Zeitschlitzangabeinformationen und Chipangabeinformationen umfassen.

8. Vorrichtung nach Anspruch 6, wobei
das Einrahmungseingabesteuermodul so konfiguriert ist, dass es durch ein empfangsseitiges Vorstufenmodul verarbeitete Daten und durch ein sendeseitiges Vorstufenmodul verarbeitete Daten empfängt.

9. Vorrichtung nach Anspruch 8, wobei
das Einrahmungseingabesteuermodul so konfiguriert ist, dass es von durch eine empfangsseitige Vorstufe verarbeitete Daten, die durch das Einrahmungseingabesteuermodul in Zeitscheiben empfangen werden, mit Basisbanddaten der Sendeseite, die durch das Einrahmungseingabesteuermodul in den Zeitscheiben empfangen werden, gemäß den vom Zeitschlitzkoordinatenberechnungsmodul erzeugten Zeitschlitzkoordinaten und aktuellen Zeitschlitzkonfigurationsinformationen eines Systems in die kontinuierlichen Einzelkanaldaten einfügt und die eingefügten Daten bei N Chipraten der Basisbanddaten des TDD-LTE-Systems in das Formfiltermodul eingibt.

10. Vorrichtung nach Anspruch 8, wobei
das Ausrahmungsausgabesteuermodul konfiguriert ist zum: Erfassen von Daten, die durch eine empfangsseitige Vorstufe verarbeitet werden, und von Basisbanddaten der Sendeseite in Zeitscheiben, die gemäß den vom Zeitschlitzkoordinatenberechnungsmodul erzeugten Zeitschlitzkoordinaten und aktuellen Zeitschlitzkonfigurationsinformationen eines Systems in die kontinuierlichen Einzelkanaldaten eingefügt und anschließend durch das Formfiltermodul gefiltert werden; und Parsen der Daten, die durch die empfangsseitige Vorstufe verarbeitet werden, und der Basisbanddaten der Sendeseite, die in die kontinuierlichen Einzelkanaldaten eingefügt und anschließend gefiltert werden, Erfassen der gefilterten Daten, die durch die empfangsseitige Vorstufe verarbeitet werden, und der gefilterten Basisbanddaten der Sendeseite und Senden der gefilterten Daten, die durch die empfangsseitige Vorstufe verarbeitet werden, und der gefilterten Basisbanddaten der Sendeseite in entsprechenden Zeitscheiben.

## Revendications

1. Procédé de filtrage par multiplexage/duplexage par répartition dans le temps, comprenant les étapes ci-dessous consistant à :
générer (S101) des coordonnées d'intervalles de temps utilisées dans le cadre d'une transmission et d'une réception de données selon un débit d'éléments de données de bande de base d'un système de technologie d'évolution à long terme de duplexage par répartition dans le temps, TDD-LTE, et d'une structure de trame du système de technologie TDD-LTE ;
recevoir (S102) des données d'un côté de transmission et d'un côté de réception au cours de tranches de temps correspondantes selon les coordonnées d'intervalles de temps générées ; ledit procédé étant **caractérisé par** les étapes ci-dessous consistant à :
incorporer (S103) les données reçues dans des données continues à canal unique, et mettre ensuite en oeuvre un filtrage de mise en forme sur les données incorporées ; et
analyser (S103) les données sur lesquelles le filtrage de mise en forme est mis en oeuvre et transmettre les données analysées aux cours de tranches de temps correspondantes selon les coordonnées d'intervalles de temps générées.

2. Procédé selon la revendication 1, dans lequel l'étape de génération de coordonnées d'intervalles de temps utilisées dans le cadre de la transmission et de la réception de données comprend l'étape ci-dessous consistant à :
générer les coordonnées d'intervalles de temps utilisées dans le cadre de la transmission et de la réception de données en prenant chaque débit « N » d'éléments des données de bande de base du système de technologie TDD-LTE comme un débit d'horloge selon la structure de trame du système de technologie TDD-LTE et le débit d'éléments des données de bande de base du système de technologie TDD-LTE, où « N » est un nombre entier qui n'est pas inférieur à « 1 », et les coordonnées d'intervalles de temps comprennent des informations d'indication de trame, des informations d'indication de sous-trame, des informations d'indication d'intervalle de temps et des informations d'indication d'élément de code.

3. Procédé selon la revendication 2, dans lequel les données du côté de transmission et du côté de réception comprennent : des données traitées par un module d'étage précédent de côté de réception et des données traitées par un module d'étage précédent de côté de transmission.

4. Procédé selon la revendication 3, dans lequel l'étape consistant à incorporer les données reçues dans des données continues à canal unique, et à mettre ensuite en oeuvre un filtrage de mise en forme sur les données incorporées comprend les étapes ci-dessous consistant à :
incorporer des données traitées par un étage précédent de côté de réception, qui sont reçues au cours de tranches de temps, avec des données de bande de base du côté de transmission, qui sont reçues au cours des tranches de temps dans les données continues à canal unique, selon les coordonnées d'intervalles de temps générées et des informations de configuration d'intervalles de temps actuelles d'un système, et appliquer en entrée les données incorporées dans un filtre de mise en forme à « N » débits d'éléments des données de bande de base du système de technologie TDD-LTE.

5. Procédé selon la revendication 3, dans lequel l'étape d'analyse des données sur lesquelles le filtrage de mise en forme est mis en oeuvre et l'étape de transmission des données analysées au cours de tranches de temps correspondantes selon les coordonnées d'intervalles de temps générées comprennent les étapes ci-dessous consistant à :
acquérir des données traitées par un étage précédent de côté de réception et des données de bande de base du côté de transmission au cours de tranches de temps, qui sont incorporées dans les données continues à canal unique et ensuite filtrées, selon les coordonnées d'intervalles de temps générées et des informations de configuration d'intervalles de temps actuelles d'un système ; et
analyser les données traitées par l'étage précédent du côté de réception et les données de bande de base du côté de transmission qui sont incorporées dans les données continues à canal unique et ensuite filtrées, acquérir les données filtrées traitées par l'étage précédent du côté de réception et les données de bande de base filtrées du côté de transmission, et transmettre les données filtrées traitées par l'étage précédent du côté de réception et les données de bande de base filtrées du côté de transmission au cours de tranches de temps correspondantes.

6. Dispositif de filtrage par multiplexage/duplexage par répartition dans le temps comprenant :
un module de calcul de coordonnées d'intervalles de temps (41), configuré de manière à générer des coordonnées d'intervalles de temps utilisées dans le cadre d'une transmission et d'une réception de données selon un débit d'éléments de données de bande de base d'un système de technologie d'évolution à long terme de duplexage par répartition dans le temps, TDD-LTE, et d'une structure de trame du système de technologie TDD-LTE, et à transmettre les coordonnées d'intervalles de temps générées à un module de commande d'entrée de verrouillage de trame et à un module de commande de sortie de déverrouillage de trame (44) ;
le module de commande d'entrée de verrouillage de trame (42) qui est configuré de manière à recevoir des données d'un côté de transmission et d'un côté de réception au cours de tranches de temps correspondantes selon les coordonnées d'intervalles de temps générées par le calcul de coordonnées d'intervalles de temps, ledit dispositif étant **caractérisé en ce qu'**il comprend en outre :
un module de filtrage de mise en forme (43), configuré de manière à incorporer les données reçues par le module de commande d'entrée de verrouillage de trame dans des données continues à canal unique, et à mettre ensuite en oeuvre un filtrage de mise en forme sur les données incorporées ; et
le module de commande de sortie de déverrouillage de trame (44) qui est configuré de manière à analyser les données sur lesquelles le filtrage de mise en forme est mis en oeuvre par le module de filtrage de mise en forme et à transmettre les données analysées aux cours de tranches de temps correspondantes selon les coordonnées d'intervalles de temps générées par le module de calcul de coordonnées d'intervalles de temps.

7. Dispositif selon la revendication 6, dans lequel :
le module de calcul de coordonnées d'intervalles de temps est configuré de manière à générer les coordonnées d'intervalles de temps utilisées dans le cadre de la transmission et de la réception de données en prenant chaque débit « N » d'éléments des données de bande de base du système de technologie TDD-LTE comme un débit d'horloge selon la structure de trame du système de technologie TDD-LTE et le débit d'éléments des données de bande de base du système de technologie TDD-LTE, où « N » est un nombre entier qui n'est pas inférieur à « 1 », et les coordonnées d'intervalles de temps comprennent des informations d'indication de trame, des informations d'indication de sous-trame, des informations d'indication d'intervalle de temps et des informations d'indication d'élément de code.

8. Dispositif selon la revendication 6, dans lequel :
le module de commande d'entrée de verrouillage de trame est configuré de manière à recevoir des données traitées par un module d'étage précédent de côté de réception et des données traitées par un module d'étage précédent de côté de transmission.

9. Dispositif selon la revendication 8, dans lequel :
le module de commande d'entrée de verrouillage de trame est configuré de manière à incorporer des données traitées par un étage précédent de côté de réception, qui sont reçues au cours de tranches de temps par le module de commande d'entrée de verrouillage de trame, avec des données de bande de base du côté de transmission, qui sont reçues au cours des tranches de temps par le module de commande d'entrée de verrouillage de trame, dans les données continues à canal unique, selon les coordonnées d'intervalles de temps générées par le module de calcul de coordonnées d'intervalles de temps et des informations de configuration d'intervalles de temps actuelles d'un système, et à appliquer en entrée les données incorporées au module de filtrage de mise en forme à « N » débits d'éléments des données de bande de base du système de technologie TDD-LTE.

10. Dispositif selon la revendication 8, dans lequel :
le module de commande de sortie de déverrouillage de trame est configuré de manière à : acquérir des données traitées par un étage précédent de côté de réception et des données de bande de base du côté de transmission au cours de tranches de temps, qui sont incorporées dans les données continues à canal unique et ensuite filtrées par le module de filtrage de mise en forme, selon les coordonnées d'intervalles de temps générées par le module de calcul de coordonnées d'intervalles de temps et des informations de configuration d'intervalles de temps actuelles d'un système ; et analyser les données traitées par l'étage précédent du côté de réception et les données de bande de base du côté de transmission qui sont incorporées dans les données continues à canal unique et ensuite filtrées, acquérir les données filtrées traitées par l'étage précédent du côté de réception et les données de bande de base filtrées du côté de transmission, et transmettre les données filtrées traitées par l'étage précédent du côté de réception et les données de bande de base filtrées du côté de transmission au cours de tranches de temps correspondantes.
